(19) **Europäisches Patentamt / European Patent Office / Office européen des brevets**

(11) **EP 2 267 487 B1**

(12) ## EUROPEAN PATENT SPECIFICATION

(45) Date of publication and mention
of the grant of the patent:
**06.04.2022 Bulletin 2022/14**

(21) Application number: **09729497.9**

(22) Date of filing: **14.01.2009**

(51) International Patent Classification (IPC):
**G01V 3/08** *(2006.01)* **G06F 17/40** *(2006.01)*

(52) Cooperative Patent Classification (CPC):
**G01V 3/082**

(86) International application number:
**PCT/CN2009/000049**

(87) International publication number:
**WO 2009/124446 (15.10.2009 Gazette 2009/42)**

(54) **THREE DIMENSIONAL SMALL BINS ELECTROMAGNETIC CONSECUTIVE ARRAY DATA ACQUISITION METHOD**

VERFAHREN ZUR ERFASSUNG VON DATEN EINES ELEKTROMAGNETISCHEN FOLGEARRAYS MIT KLEINEN DREIDIMENSIONALEN GEFÄSSEN

PROCÉDÉ D'ACQUISITION DE DONNÉES DE RÉSEAU CONSÉCUTIVES ÉLECTROMAGNÉTIQUES À PETITS COMPARTIMENTS EN TROIS DIMENSIONS

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **10.04.2008 CN 200810103695**

(43) Date of publication of application:
**29.12.2010 Bulletin 2010/52**

(73) Proprietors:
• **Bgp Inc., China National Petroleum Corporation**
**Hebei 072751 (CN)**
• **China National Petroleum Corporation**
**Beijing 100007 (CN)**

(72) Inventors:
• **HE, Zhanxiang**
**Hebei 072751 (CN)**
• **SUN, Weibin**
**Hebei 072751 (CN)**
• **WANG, Yongtao**
**Hebei 072751 (CN)**
• **TAO, Deqiang**
**Hebei 072751 (CN)**
• **HU, Zuzhi**
**Hebei 072751 (CN)**
• **LUO, Weifeng**
**Hebei 072751 (CN)**

• **ZHANG, Yue**
**Hebei 072751 (CN)**

(74) Representative: **Zeuner Summerer Stütz Patent- und Rechtsanwälte Partnerschaft**
**Nußbaumstraße 8**
**80336 München (DE)**

(56) References cited:
**CN-A- 1 580 818      CN-A- 86 103 551**
**CN-A- 101 017 205    CN-A- 101 017 205**
**US-A- 4 862 089      US-A- 5 043 667**
**US-A- 5 043 667      US-A1- 2004 153 246**

• **BEN K. STERNBERG ET AL: "Correction for the static shift in magnetotellurics using transient electromagnetic soundings", GEOPHYSICS, vol. 53, no. 11, 1 November 1988 (1988-11-01), pages 1459-1468, XP055384838, US ISSN: 0016-8033, DOI: 10.1190/1.1442426**
• **MINSLEY B J ET AL: "Minimization of self-potential survey mis-ties acquired with multiple reference locations", GEOPHYSICS, SOCIETY OF EXPLORATION GEOPHYSICISTS, US, vol. 73, no. 2, 1 March 2008 (2008-03-01), pages F71-F81, XP001511372, ISSN: 0016-8033, DOI: 10.1190/1.2829390**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- WANG, Y. ET AL.: 'Proceeding of the 8th China International Geo-Electromagnetic Workshop.', 2007 deel '3D Data acquisition technology for Gravity-Magnetic-Electromagetics in southern area covered by carbonate rock.', pages 31 - 35, XP008171066
- SUN, W. ET AL.: 'THE DEVELOPMENT OF MT SONDING TECHNIQUE AND ITS APPLICATION TO THE OIL AND GAS EXPLORATION' GEOLOGY AND PROSPECTING. vol. 39, October 2003, pages 3 - 9, XP008145743

## Description

### Field of the Invention

The invention relates to data acquisition method with a three dimensional small bins electromagnetic consecutive array which can effectively suppress and remove noises by means of a closed electric filed and can remove static shift by planar space filtering on time series.

### Description of Related Art

Currently, a magnetotelluric method is widely used in oil-gas, ores and groundwater resources exploration. So far the single-point sounding method (in one dimension) or cross-section sounding method (in two dimensions) has been used. The one-dimensional acquisition method comprises the following steps for each survey point: 1) to set an orthogonal electromagnetic field four-component receiving station (Ex, Ey, Hx, Hy), or a five-component receiving station (Ex, Ey, Hx, Hy, Hz) to gather the time domain electromagnetic field continuously; 2) to obtain power spectrum of each field component by Fourier Transform of data in time domain indoor; 3) to estimate impedance tensor by using the power spectrum; 4) and finally to calculate apparent resistivity and phase difference. For two-dimensional acquisition method at a survey station along a line, it is necessary to deploy a plurality of orthogonal electromagnetic field two-component (or four-component or five-component) receiving stations to record the time domain electromagnetic field continuously, while its data processing is the same as that of the single-point sounding method.

The above methods can achieve wonderful effect when being applied to simple underground structures, such as one-dimensional or two-dimensional geological conditions. However, in the case of complex upper or underground structures, such as those in three dimensions, the above methods can not meet the actual requirements in terms of solving geological problems and interpretation precision; in particular, firstly, it is hard to suppress and remove static shift effectively, so exploration results are significantly affected by the static shift, even to generate false structures; and secondly, it is difficult to suppress noise interference effect effectively, so data quality is affected; furthermore, the above methods can not solve this problem either, that is, because only one magnetic station is placed on a relatively long array, distance between the magnetic station and each survey point differs greatly, which is not reasonable in a zone in which the magnetic field varies significantly.

A method of magnetotelluric exploration is described in US5043667A, wherein measures of the earth's electric and magnetic fields are obtained at a plurality of sensing locations comprising an areal array of sensing locations. The method does not attempt to remove noise from the sensed data, and it is suggested to use two-dimensional filtering to remove the effects of near surface features that are known to cause static shift in the sensed data.

CN101017205A discloses one large electromagnetic method with high resolution rate and to remove static frequency, it comprises multiple collection devices onto explore areas with same electrode near public electrode point to get normal observation curve on each result; adding the near two points, three points to total points in same field to compute even value on time sequence data as new electric field value.

### Summary of the Invention

The present invention provides a data acquisition method with a three dimensional small bins electromagnetic consecutive array which can effectively suppress and remove noise by means of a closed electric filed, and can remove static shift by planar space filtering on time series, thereby acquired data quality can be improved dramatically.

The present invention comprises the method according to claim 1.

(1) Electrodes are arranged in a lattice forming a small bin arrangement in a working area; a two-component electric field acquisition station (Ex, Ey) is deployed at each node of a small bin, wherein the nodes include corner points, border points and center points of the small bin. Electrodes of the electric field components are arranged in an "L" style of the conventional electrode-arranging mode for corner points, and a "T" style of the conventional electrode-arranging mode for border points, and a "+" style of the conventional electrode-arranging mode for center points, wherein, the "L" electrode-arranging mode consists of the corner point and its adjacent two grounded points, the "T" electrode-arranging mode consists of the border point and its adjacent three grounded points, and the "+" electrode-arranging mode consists of the center point and its adjacent four grounded points; a two-component orthogonal horizontal magnetic fields (Hx, Hy) or a three-component orthogonal magnetic fields (Hx, Hy, Hz) acquisition station is deployed at the center point of the smallest bin, wherein the directions of Hz and Hy are parallel to those of the electric field components.

In step (1), in the small bins lattice acquisition method, each small bin is in the unit of 2x2, 3x3, 4x4 or 5x5 points, and wherein, the smallest bin only has corner points.

In step (1), a unit bin of $2 \times 2$ points is referred to as the smallest bin.

In step (1), a unit bin of $3 \times 3$ points is divided into four smallest bins.

In step (1), a unit bin of 4x4 points is divided into nine smallest bins.

In step (1), the corner points and border points of the small bin and the center point of the connection line connecting each two adjacent survey points are the grounded points of receiving electrodes (M, N) as well as common electrodes of the adjacent survey points, and no electrode is arranged at the center point.

In step (1), each two adjacent survey points of the small bin are connected by a common electrode, since the inner potential difference of the small bin is closed, the sum of the potential differences recorded by the acquisition station at any time is equal to zero.

In step (1), distance between the respective survey points of the smallest bin and the magnetic station is equal to 0.5L or 0.707L, where L is the side length of the smallest bin.

(2) When recording data, each acquisition station records time series data of the natural electromagnetic field with the same acquisition parameters simultaneously, and a sampling rate being set according to acquisition frequencies.

In step (2), a high sampling rate is applied for the high frequency range to obtain a shorter gathering time, a medium sampling rate is applied for the medium frequency range, and a low sampling rate is applied for the low frequency range to obtain a longer gathering time.

(3) The recorded data is processed to remove interference and recorded data is obtained without interferences.

In step (3), the interference--removing processing is a space-closed adjustment processing of data at any time, which comprises the following steps: adding together the potential differences of each survey point in each closed loop along the direction of the closed loop and then assign the sum of the potential differences in each closed loop to the respective survey points to adjust the loop, wherein the adjustment is first performed in the small loop inside each smallest bin, wherein the small loop inside each smallest bin consists of four corner points of the smallest bin, and then comparing the sum of the potential differences with a prescribed minimum tolerance value to identify the interference data.

In step (3), as to the interference--removing processing, if the whole closed loop at a certain time is interfered and the sum of the potential differences is greater than a prescribed minimum tolerance value, the data recorded at this time would be deleted, then adjusting the outmost loop of the small bin to obtain interference-free data.

In step (3), the observation data without interference means that the closing error of any loop is smaller than the specified minimum tolerance value.

(4) for each border point or center point, calculating the average value of the same component of electric field of the border or center point and the adjacent two points, three points, up to all points, one or more points on each side of the survey point; for the corner points, calculating the average value of the same component of electric field of the corner point and the adjacent point, two points, up to all points; using the calculated maximum electrode distance electric field component as the new electric field value of the survey point.

In step (4), said "adjacent two points to total points for the border point and the center point" is referred to as two points adjacent to the border point or the center point to all the electric field recording points on both sides of the border point or the center point along a straight survey line where the border point or the center point is located.

In step (4), said "adjacent two points to total points for corner points" is referred to as two points adjacent to the corner point to all the electric field recording points on two straight survey lines whose intersection is the corner point.

(5) After the observation fileds are processed with the previous steps to obtain new time series data since the noise and the static shift effect have been suppressed, then apparent resistivity and phase curves of each point is obtained by processing obtained new time series data, wherein, the observation field refers to the electric field observation value of the survey point.

The step (5) further comprises calculating power spectrum and impedance tensor to obtain the apparent resistivity and phase curves of each point, wherein the magnetic field components share the same magnetic field as that of the center point.

The step (5) further comprises executing the power spectrum analysis and impedance tensor estimation for the time series data with different electrode distance of each survey point to obtain a sequence of apparent resistivity observation curves of the same recording point.

The step (5) further comprises drawing frequency-apparent resistivity curves of different electrode distance of the same survey point on a log-log coordinate, and comparing the variation rule of the resistivity curves to analyze whether said curves are affected by the static shift: the apparent resistivity curve obtained by the electric field with the largest electrode distance is least affected by the static shift; if all curves are coincident with the apparent resistivity curve of the largest electrode distance, there is no static shift; and if the curves of a smaller electrode distance are offset relative to the curves of the largest electrode distance, there is a static shift.

## Brief Description of the Drawings

Fig. 1 is a schematic diagram showing the data gathering setting of small bins according to the present invention;

Fig. 2 is a schematic diagram showing "L", "T" and "+" electrode-arranging mode in acquisition according to the present invention;

Fig. 3 is a schematic diagram showing calculation of electric fields of a border and a center point in the same direction;

Fig. 4 is a schematic diagram showing calculation of electric fields of the a corner point and s border point in the same direction;

Fig. 5 is a schematic diagram showing a small bin A of 3x3 points.

## Detailed Description of the Preferred Embodiments

The detailed steps of the present application will be described in accompany with the drawings.

Step (1): applying small bins lattice acquisition on execution of arranging electrodes in a working area

Each small bin is in the unit of 2x2, 3x3, 4x4 or 5x5 points.

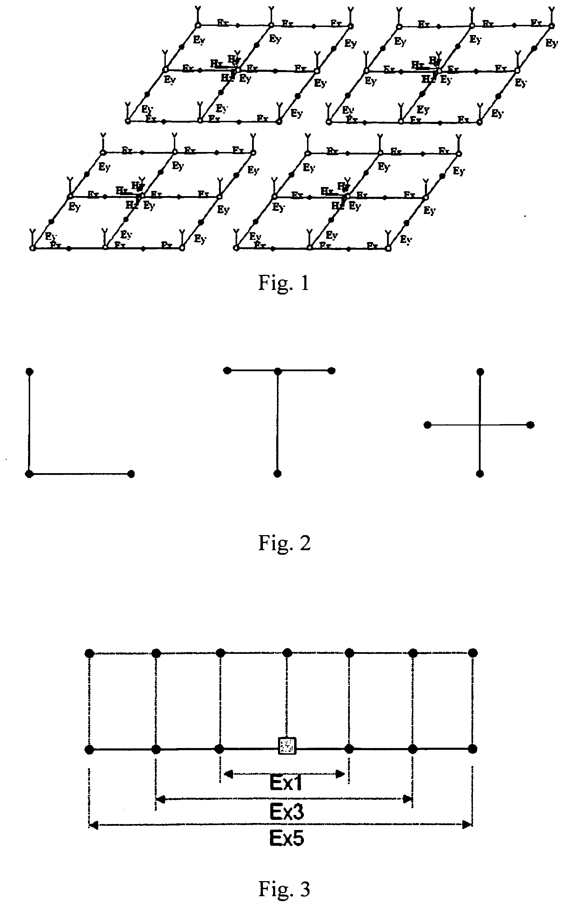

According to the number of instruments, each smallest bin unit (2x2) is arranged with a two-component or three-component electromagnetic acquisition station at the center, a bin of 3x3 points can be divided into four smallest bins, a bin of 4x4 points can be divided into nine smallest bins, and border points and corner points of the small bins are not equipped with a magnetic field acquisition station (shown in Fig.1).

A rule for arranging electrodes for electric field components is as follows: an "L" style of the conventional electrode-arranging mode is used for corner points, a "T" style of the conventional electrode-arranging mode is used for border points, and a "+" style of the conventional electrode-arranging mode is used for the center point (shown in Fig. 2). The corner points, border points, and the center point of the connection line connecting each two adjacent survey points are the grounded points of the receiving electrodes (M, N) as well as the common electrodes of the adjacent survey points, and no electrode is arranged at the center point. Therefore, each two adjacent survey points of the small bin are connect by the common electrode, since the inner potential difference of the small bin can be closed, the sum of the potential differences recorded by the acquisition station inside the small bin at any time and in any closed loop is equal to zero.

As to arrangement of electrodes for magnetic field components, two-component orthogonal horizontal magnetic fields (Hx, Hy) or a three-component orthogonal magnetic fields (Hx, Hy, Hz) magnetic bar is arranged at the center point of the smallest bin, wherein the directions of Hx and Hy are parallel to those of the electric field components, respectively. Distance between the respective survey points of the small bin and the magnetic station does not differ greatly, which is 0.5L or 0.707L, where L is the side length of the smallest bin.

Step (2): recording data

After a small bin being deployed, each acquisition station records data with the same acquisition parameters simultaneously to get time series data of the natural electromagnetic field as the conventional method, wherein the sampling rate can be set to the following three kinds: in the high frequency range, a higher sampling rate is used to shorten the gathering time period, in the medium frequency range, a medium sampling rate is used, and in the low frequency range, a lower sampling rate is used.

Step (3): performing interference--removal processing indoor

Data at any time is processed by space-closed adjustment which comprises the following steps: 1) to assign data error in each closed loop to the respective survey point; 2) to conduct adjustment in each small loop; 3) then to identify interference data, and calculate data without interference using the closed loop principle for potential fields. If the adjustment value is smaller than a certain tolerance value, it is deemed that obtained data is of no interference; if the adjustment value is greater than the tolerance value, it means there is interference in the whole closed-loop, so the data recorded at this time are deleted. After the outmost loop of the small bin being adjusted, a set of new observation data can be obtained.

Step (4): conducting static shift-removal processing

The newly obtained time series data by the above interference removal processing are further processed. For the border points and the center point, the recording point is used as the center point, the same component from the adjacent two points, three points, or four points is added to total points to obtain the average value of the time domain electric field data of all survey points; for the corner points, the average value of the same component of the adjacent two points or three points is calculated to add to the total points toward the bin direction; the electric filed components obtained in the largest space distance is used as new electric field values, respectively. Such processing is actually aimed at filtering static shift effects at high frequency segment in the spacial domain.

The power spectrum analysis and impedance tensor estimate are conducted for data with different length of electrode distance of each survey point to obtain a sequence of topology apparent resistivity curves of the same recording point. The apparent resistivity curves with different electrode distance of the same survey point are drawn on a log-log coordinate, variation rules of different resistivity curves are analyzed to get affecting range of static shift. In general, the apparent resistivity curve obtained by the electric field with the largest electrode distance is the least affected by the static shift effect, if all curves are coincident with the apparent resistivity curve with the largest electrode distance, there is no static shift, and if the curves with smaller electrode distance are offset relative to the curve with the largest electrode distance, there is static shift. In general, the larger the offset, the greater the static shift effect will be.

Step (5): For the newly obtained time series data obtained after the processing of the above steps, power spectrum and impedance tensor are calculated with a conventional method to obtain the apparent resistivity and phase curves and other calculated results of each point, wherein the magnetic field components share the same magnetic field as that of the center point. The new calculated results are of noise-free and static shift effect--suppressed, thus the data acquisition quality in an area where EM data featuring serious noise interference and static shift is improved significantly.

Fig. 1 shows an embodiment of the present invention.

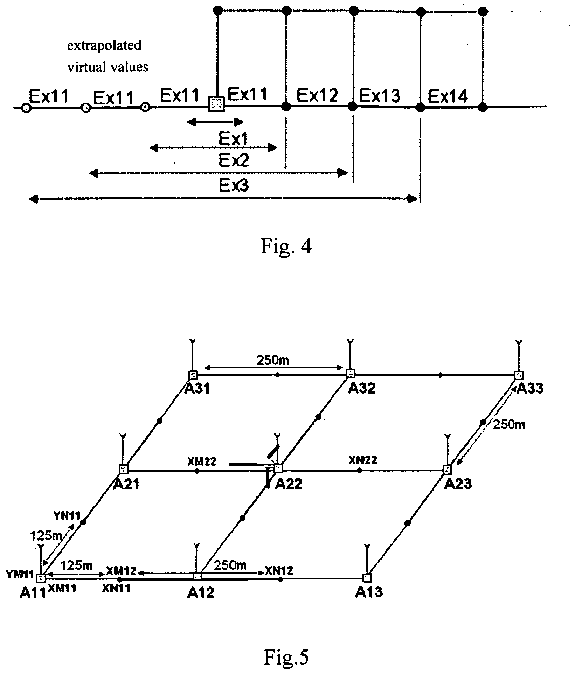

(1) Applying a 3x3 small bin lattice acquisition on execution of arranging electrodes in a working area: three dimensional EM consecutive array exploration is done upon 36 electric field acquisition stations and 16 magnetic field acquisition stations, an acquisition lattice with 4 small bins is arranged, and each small bin is of $3\times3$ points, the lattice has a size of $250 \times 250$m. The A bin lattice nodes (i.e. survey points) are numbered as A11, A12, A13; A21, A22, A23; A31, A32, A33 (shown in Fig.5). Similarly, B, C and D bins lattices are numbered in the same way. A11, A31, A13 and A33 are corner points, electrode distances of both Ex and Ey are 125m. For example, for the corner point A11 in an "L" electrode-arranging mode, electric dipoles of Ex are XM11-XN11, wherein XM11 is located at point A11 and XN11 is located at the center point between A11 and A12; and electric dipoles of Ey are YM11-YN11, wherein YM11 is located at point A11 and YN11 is located at the center point between A11 and A21; other points may be arranged in a similar way. A12, A21, A23 and A32 are border points deployed in a "T" electrode-arranging mode, the electric dipoles along the border have a length of 250m, and the electric dipoles that face inside of a bin have a length of 125m, for example, for the border point A12, electric dipoles of Ex are XM12-XN12, wherein XM12 has a common electrode with XN11 of point A11, and XN12 has a common electrode with XM13 of point A13, other points may be arranged in a similar way. A22 is the center point deployed in a "+" electrode-arranging mode, electric dipole distances of both Ex and Ey are 250m: the electric dipoles of Ex are XM22-XN22, wherein XM22 is the center point between A21 and A22, and XN22 is the center point between A22 and A23; and the electric dipoles of Ey are YM22-YN22, wherein YM22 is the center point between A12 and A22, YN22 is the center point between A22 and A32, and the center point A22 is equipped with orthogonal horizontal magnetic fields Hx and Hy.

(2) Data recording: when recording data, each acquisition station records time series data of the natural electromagnetic field with the same acquisition parameters simultaneously, and a sampling rate can be set according to frequency ranges. After A, B, C and D small bins are arranged, three sampling rates are set in the following way: in the high frequency range, a high sampling rate is used to obtain a shorter recording time period; in the medium frequency range, a medium sampling rate is used, and in the low frequency range, a low sampling rate is used accordingly. Each acquisition station records time series data of the natural electromagnetic field simultaneously.

(3) Interference--removal processing is conducted over the recorded data firstly to obtain interference-free data: the time series data is first extracted indoor, and the recorded data of the same time in each small bin is then adjusted to make closing error of each small bin is zero. It is provided that the minimum tolerance adjustment value is $\varepsilon$, firstly a closed adjustment is conducted in the smallest loop such as loop A11-A12-A22-A21-A11, then 8 potential differences, namely a potential difference V11X of point A11 in X direction, half potential difference V12X of point A12 in X direction, a potential difference V12Y of point A12 in Y direction, half potential difference V22Y of point A22 in Y direction, half potential difference V22X of point A22 in X direction, a potential difference V21X of point A21 in X direction, half potential difference V21Y of point A21 in Y direction, and a potential difference V11Y of point A11 in Y direction, are added together:

$$DV = V11X + V12X + V12Y + V22Y + V22X + V21X + V21Y + V11Y$$

If the measurement precision is very high, then $|DV| < \pm \varepsilon$.

However, the actually recorded data are not likely equal to zero due to various interferences. Therefore, it is necessary to perform adjustment and to assign the error to each path evenly.

So, V11X0=V11X+DV/8, V12X0=V12X+DV/8

V21X0=V21X+DV/8, V22X0=V22X+DV/8
V11Y0=V11Y+DV/8, V12Y0=V12Y+DV/8
V21Y0=V21Y+DV/8, V22Y0=V22Y+DV/8

After each time series data are adjusted, the adjusted time series data of the first loop are obtained. Similarly, other closed loops in the small bin can be adjusted. If the calculated sum value is too large (greater than $\varepsilon$, wherein $\varepsilon$ is the tolerance value of the potential difference of the closed loops), which means strong interference exists at this time, then it is analyzed from which path the interference comes mainly, and values of other paths within the same closed loop are used to calculate the value of the said path which cause a large potential difference. If the data of all paths within a closed loop offsets notably, the data at this time need to be deleted directly. Adjustments of other closed loops are executed in turn, wherein adjustments of the common borders and common nodes can be calculated together, for example, the electric field Ex of the center point is the sum of the originally recorded value plus all adjustment values of each closed loop. Finally, the closed error of the outer loop of the small bin is calculated to check the adjustment effect. After the adjustment, a new set of time series data is obtained. The apparent resistivity and phase curves of each point obtained by calculating the electromagnetic field power spectrum and impedance tensor of each survey point can be compared with the original curves.

(4) For the border points and the center point, the recording point is used as the center point, the same component from the adjacent two points is added to the value of a point to obtain the average value of time domain electric field data of all survey points; and the new time series data obtained after adjustment is processed, for example, for the data of electric field Ex of the border point A12, the electric filed average value Ex12-3-(E11+E12+E13)/3 of three points A11, A12 and A13 is calculated to serve as the electric field value of point A12, and for the electric field Ex of the center point A22, the electric filed average value Ex22-3=(E21+E22+E23)/3 of three points A21, A22 and A23 is calculated to serve as the electric field value of point A22; for the corner points, the average value of the same electric field component from the adjacent two points to total survey points is calculated toward the bin direction; for example, for the electric field Ex of the corner point A11, the electric filed average values Ex11-12=(3E11+E12)/4 and Ex11-13=(4E11+E12+E13)/6 of A11, A12 and A11, A12, A13 are calculated to serve as the electric field value of point A11, and so on. Therefore a set of new electric field values of each survey point from small electrode distance to large electrode distance can be obtained and the electric field value with the calculated largest electrode distance can serve as a new electric field observation value.

In order to obtain static shift of certain points, the power spectrum and a series of topology apparent resistivity and phase curves of this point can be calculated with the above power spectrum calculation method. Apparent resistivity curves with different electrode distance of the same survey point is drawn on a log-log coordinate, for example, 3 apparent resistivity curves of point A11 are used to analyze the variation rule of the apparent resistivity curves, if these 3 curves are coincident, there is no static shift; if the curves with a smaller electrode distance are significantly higher or lower than curves with a larger electrode distance, there is static displace effect.

(5) Processing the new time series data with a conventional method. The noise and static shift in the new time series data are suppressed after noise-removal adjustment at time domain and filtering at spacial domain to obtain new sections of apparent resistivity and phase curves with increased precision and reliability.

### Industrial practice

The apparent resistivity and phase curves of each point and other calculation results can be obtained after calculating the power spectrum and estimating impedance tensor with a conventional method upon the new time series data according to the present invention, wherein the magnetic field components of each survey point of the smallest bin share the same magnetic field as that of the center point. In the present application, noise and static shift effect are suppressed, thus the data acquisition quality in areas with EM data of serious noise interference and static shift is improved significantly. The present invention is used widely in electromagnetic data acquisition in many conditions such as on the earth and in the sea.

### Claims

1. A small bins electromagnetic consecutive array data acquisition method, said method comprising the following steps:

(1) arranging electrodes in a lattice forming a small bin arrangement in a working area, arranging a two-component electric field acquisition station (Ex, Ey) at each node of a small bin, wherein the nodes include corner points, border points and center points of the small bin, wherein an "L" electrode-arranging mode is used for corner points, a "T" electrode-arranging mode is used for border points, and a "+" electrode-arranging mode is used for a center point, wherein, the "L" electrode-arranging mode consists of the corner point and its adjacent two grounded points, the "T" electrode-arranging mode consists of the border point and its adjacent three grounded points, and the "+" electrode-arranging mode consists of the center point and its adjacent four grounded points; arranging a two-component orthogonal horizontal magnetic fields (Hx, Hy) sensor or a three-component orthogonal magnetic fields (Hx, Hy, Hz) sensor at the center point of the smallest bin, wherein the directions of Hx and Hy are parallel to those of the electric field components, and wherein, in the small bins lattice acquisition, each small bin is of the unit of 2×2, 3×3, 4×4 or 5×5 points, and the smallest bin is of the unit of 2×2 points; a unit bin of 3×3 points is divided into four smallest bins, and a unit bin of 4×4 points is divided into nine smallest bins, and wherein, the smallest bin only has corner points;

(2) when conducting data recording, each acquisition station records natural electromagnetic field time series data with the same acquisition parameters simultaneously, and a sampling rate being set upon frequency;

(3) interference is first removed during data processing to obtain interference-free data, wherein the interference removal processing comprises the following steps: a) adding together the potential differences of each survey point in each closed loop along the direction of the closed loop to obtain a closing error, and comparing the closing error to a prescribed minimum tolerance value; b) if the closing error is smaller than the minimum tolerance value, assigning the sum of the potential differences in 35 each closed loop to the respective survey points to adjust the loop by dividing the value of the closing error by the number of survey points, and adding the obtained value to the measured potential difference value of each survey point, wherein the adjustment is first performed in the closed loop inside each smallest bin, wherein the closed loop inside each smallest bin consists of four corner points of the smallest bin, c) if the closing error is greater than the prescribed minimum tolerance value, the data recorded at this time is deleted;

(4) for each border survey point, calculating the average value of the same component of electric field of the border survey point and the adjacent two survey points, wherein one of the adjacent survey points is on each side of the border survey point; repeating the calculation with two adjacent survey points on each side of the border survey point, and increasing the number of adjacent survey points on each side of the border survey point until all survey points on the same border have been used; for the corner survey points, calculating the weighted average value of the same component of electric field of the corner survey point and two adjacent survey points, wherein one of the adjacent survey points is on each side of the corner survey point, repeating the calculation with two adjacent survey points on each side of the corner survey point, and increasing the number of adjacent survey points on each side of the corner survey point until all survey points on the each border adjacent to the corner survey point have been used; 10 using the value of electric field calculated with the maximum number of adjacent survey points and therefore the maximum electrode distance as the new electric field value of the border or corner survey point;

(5) obtaining apparent resistivity curves and phase curves for each survey point.

2. The small bins electromagnetic consecutive array data acquisition method according to claim 1, **characterized in that**, in step (1), the corner points and border points of the small bin and the center point of the connection line between each two adjacent survey points are grounded points of receiving electrodes (M, N), which serve as common electrodes of the adjacent survey points, and no electrode is arranged in the center point.

3. The small bins electromagnetic consecutive array data acquisition method according to claim 1, **characterized in that**, in step (1), distance between the survey points and the magnetic field acquisition station in the smallest bin is 0.5L or 0.707L, where L is the side length of the smallest bin.

4. The small bins electromagnetic consecutive array data acquisition method according to claim 1, **characterized in that**, in step (2), a high sampling rate is applied for the high frequency range to obtain a shorter gathering time, a medium sampling rate is applied for the medium frequency range, and a low sampling rate is applied for the low frequency range to obtain a longer gathering time.

5. The small bins electromagnetic consecutive array data acquisition method according to claim 1, **characterized in that**, the step (5) further comprises steps: 1) to calculate power spectrum and impedance tensor to obtain the apparent resistivity and phase curves of each point, wherein the magnetic field components of the respective survey points of the smallest bin share the same magnetic field as that of the center point; 2) to conduct the power spectrum analysis and impedance tensor estimate on the time series data of each survey point for each electric field value calculated in step 4, to obtain a sequence of apparent resistivity curves of the same survey point; 3) to draw frequency-apparent resistivity curves, for each electric field value calculated in step 4, of the same survey point on a log-log logarithmic coordinate, and 4) to compare the variation rules of the curves to analyze whether said curves are affected by the static shift: the apparent resistivity curve obtained by the electric field with the maximum electrode distance is the representative of the minimum static shift effect, if all curves are coincident with the apparent resistivity curve with the maximum electrode distance, there is no static shift, and if curves of a relatively smaller electrode distance are offset relative to the curve of the maximum electrode distance, there is static shift.

**Patentansprüche**

1. Verfahren zur Erfassung von Daten eines elektromagnetischen Folgearrays mit kleinen Kästen, wobei das Verfahren die folgenden Schritte umfasst:

(1) Anordnen von Elektroden in einem Gitter, das eine Anordnung von kleinen Kästen in einem Arbeitsbereich bildet, Anordnen einer Zweikomponenten-Erfassungsstation (Ex, Ey) eines elektrischen Feldes an jedem Knoten eines kleinen Kastens, wobei die Knoten Eckpunkte, Randpunkte und Mittelpunkte des kleinen Kastens umfassen, wobei ein "L"-Elektrodenanordnungsmodus für Eckpunkte verwendet wird, ein "T"-Elektrodenanordnungsmodus für Randpunkte verwendet wird und ein "+"-Elektrodenanordnungsmodus für einen Mittelpunkt verwendet wird, wobei der "L"-Elektrodenanordnungsmodus aus dem Eckpunkt und dessen anliegenden zwei geerdeten Punkten gebildet wird, der "T"-Elektrodenanordnungsmodus aus dem Randpunkt und dessen anliegenden drei geerdeten Punkten gebildet wird und der "+"-Elektrodenanordnungsmodus aus dem zentralen Punkt und dessen anliegenden vier geerdeten Punkten gebildet wird; Anordnen eines orthogonalen, horizontalen Zwei-Komponentenmagnetfeld-(Hx, Hy)-Sensors oder eines orthogonalen Drei-Komponentenmagnetfeld-(Hx, Hy, Hz)-Sensors am Mittelpunkt des kleinsten Kastens, wobei die Richtungen von Hx und Hy parallel zu denen der elektrischen Feldkomponenten sind, und wobei in dem Erfassungsgitter von kleinen Kästen jeder kleine Kasten von der Einheit von 2x2, 3x3, 4x4 oder 5x5 Punkten ist und der kleinste Kasten von der Einheit 2x2 Punkte ist; eine Kasteneinheit von 3x3 Punkten in vier kleinste Kästen unterteilt wird und eine Kasteneinheit von 4x4 Punkten in neun kleinste Kästen unterteilt wird und wobei der kleinste Kasten nur Eckpunkte aufweist;

(2) bei der Durchführung der Datenaufzeichnung zeichnet jede Erfassungsstation Zeitseriendaten natürlicher elektromagnetischer Felder mit denselben Erfassungsparametern gleichzeitig auf, und wobei eine Abtastfrequenz je nach der Frequenz festgelegt wird;

(3) die Interferenz wird zunächst während der Datenverarbeitung entfernt, um interferenzfreie Daten zu erhalten, wobei die Interferenzentfernungs-Verarbeitung die folgenden Schritte umfasst:

a) Addieren der Potenzialdifferenzen jedes Überwachungspunktes in jeder geschlossenen Schleife entlang der Richtung der geschlossenen Schleife zum Erhalten eines Abschlussfehlers und Vergleichen des Abschlussfehlers mit einem vorgeschriebenen Mindesttoleranz-Wert;

b) wenn der Abschlussfehler kleiner ist als der Mindest-Toleranzwert, Zuordnen der Summe der Potenzialdifferenzen in jeder geschlossenen Schleife zu den jeweiligen Überwachungspunkten zum Anpassen der Schleife durch Teilen des Wertes des Abschlussfehlers durch die Anzahl von Überwachungspunkten und Hinzufügen des erhaltenen Wertes zu dem gemessenen Potenzialdifferenz-Wert jedes Überwachungspunktes, wobei das Anpassen zuerst in der geschlossenen Schleife innerhalb jedes kleinsten Kastens durchgeführt wird, wobei die geschlossene Schleife innerhalb jedes kleinsten Kastens aus vier Eckpunkten des kleinsten Kastens gebildet wird,

c) wenn der Abschlussfehler größer ist als der vorgeschriebene Mindest-Toleranzwert, werden die zu dem Zeitpunkt aufgezeichneten Daten gelöscht;

(4) für jeden Randüberwachungspunkt Berechnen des durchschnittlichen Wertes derselben Komponente des elektrischen Feldes des Randüberwachungspunktes und der anliegenden zwei Überwachungspunkte, wobei je einer der anliegenden Überwachungspunkte auf jeder Seite des Randüberwachungspunktes angeordnet ist;

Wiederholen der Berechnung mit zwei anliegenden Überwachungspunkten auf jeder Seite des Randüberwachungspunktes und Erhöhen der Anzahl von anliegenden Überwachungspunkten auf jeder Seite des Randüberwachungspunktes, bis alle Überwachungspunkte an demselben Rand verwendet wurden; für die Ecküberwachungspunkte Berechnen des gewichteten durchschnittlichen Wertes derselben Komponente des elektrischen Feldes des Ecküberwachungspunktes und zwei anliegenden Überwachungspunkten, wobei je einer der anliegenden Überwachungspunkte auf jeder Seite des Ecküberwachungspunktes angeordnet ist, Wiederholen der Berechnung mit zwei anliegenden Überwachungspunkten auf jeder Seite des Ecküberwachungspunktes und Erhöhen der Anzahl von anliegenden Überwachungspunkten auf jeder Seite des Ecküberwachungspunktes, bis alle Überwachungspunkte auf jedem Rand, der an dem Ecküberwachungspunkt anliegend ist, verwendet wurden;

Verwenden des Wertes des elektrischen Feldes, der mit der maximalen Anzahl von anliegenden Überwachungspunkten berechnet wurde, und daher der maximalen Elektrodenentfernung als den neuen elektrischen Feldwert des Rand- oder Ecküberwachungspunktes;

(5) Erhalten von erkennbaren Widerstandskurven und Phasenkurven für jeden Überwachungspunkt.

2. Verfahren zur Erfassung von Daten eines elektromagnetischen Folgearrays mit kleinen Kästen gemäß Anspruch 1, **dadurch gekennzeichnet, dass** in Schritt (1) die Eckpunkte und die Randpunkte des kleinen Kastens und der Mittelpunkt der Anschlussleitung zwischen jedem von zwei anliegenden Überwachungspunkten geerdeten Punkten von empfangenden Elektroden (M, N) sind, die als gemeinsame Elektroden der anliegenden Überwachungspunkte dienen, und keine Elektrode im Mittelpunkt angeordnet ist.

3. Verfahren zur Erfassung von Daten eines elektromagnetischen Folgearrays mit kleinen Kästen gemäß Anspruch 1, **dadurch gekennzeichnet, dass** in Schritt (1) die Entfernung zwischen den Überwachungspunkten und der Magnetfeld-Erfassungsstation in dem kleinsten Kasten 0,5 L oder 0,707 L beträgt, wobei L die Seitenlänge des kleinsten Kastens ist.

4. Verfahren zur Erfassung von Daten eines elektromagnetischen Folgearrays mit kleinen Kästen gemäß Anspruch 1, **dadurch gekennzeichnet, dass** in Schritt (2) eine hohe Abtastfrequenz für den hohen Frequenzbereich angewendet wird, um eine kürzere Erfassungszeit zu erreichen, eine mittlere Abtastfrequenz für den mittleren Frequenzbereich angewendet wird, und eine niedrige Abtastfrequenz für den niedrigen Frequenzbereich angewendet wird, um eine längere Erfassungszeit zu erreichen.

5. Verfahren zur Erfassung von Daten eines elektromagnetischen Folgearrays mit kleinen Kästen gemäß Anspruch 1, **dadurch gekennzeichnet, dass** Schritt (5) weiterhin die Schritte umfasst: 1) Berechnen des Leistungsspektrums und des Impedanztensors zum Erhalten der erkennbaren Widerstands- und Phasenkurven jedes Punktes, wobei die Magnetfeld-Komponenten der jeweiligen Überwachungspunkte des kleinsten Kastens dasselbe Magnetfeld wie das des Mittelpunktes teilen: 2) Durchführen der Leistungsspektrumsanalyse und der Impedanztensorschätzung auf den Zeitseriendaten jedes Überwachungspunktes für jeden, in Schritt 4 berechneten elektrischen Feldwert, zum Erhalten einer Sequenz von erkennbaren Widerstandskurven desselben Überwachungspunktes, 3) Zeichnen von frequenzanzeigenden Widerstandskurven für jeden, in Schritt 4 berechneten elektrischen Feldwert desselben Überwachungspunktes auf einer doppelten logarithmischen Koordinate und 4) Vergleichen der Variationsregeln der Kurven zum Analysieren, ob die genannten Kurven durch die statische Verschiebung beeinflusst werden: Die erkennbare Widerstandskurve, die durch das elektrische Feld mit der maximalen Elektrodenentfernung erhalten wird, ist die Darstellung der minimalen statischen Verschiebungswirkung, wenn alle Kurven mit der erkennbaren Widerstandskurve mit der maximalen Elektrodenentfernung zusammenfallen, gibt es keine statische Verschiebung und wenn Kurven einer relativ kleineren Elektrodenentfernung relativ zur Kurve der maximalen Elektrodenentfernung versetzt werden, gibt es eine statische Verschiebung.

**Revendications**

1. Procédé d'acquisition de données à réseau consécutif électromagnétique à petits compartiments, ledit procédé comprenant les étapes suivantes :

(1) agencement d'électrodes selon un maillage formant un agencement à petits compartiments dans une zone de travail, agencement d'une station d'acquisition de champ électrique à deux composantes (Ex, Ey) à chaque nœud d'un petit compartiment, dans lequel les noeuds comportent des points de coin, des points de bord et des points centraux du petit compartiment, dans lequel un mode d'agencement d'électrodes en « L » est utilisé pour les points de coin, un mode d'agencement d'électrodes en « T » est utilisé pour les points de bord, et un mode d'agencement d'électrodes en « + » est utilisé pour un point central, dans lequel le mode d'agencement d'électrodes en « L » consiste en un point de coin et ses deux points mis à la terre adjacents, le mode d'agencement d'électrodes en « T » consiste en le point de bord et ses trois points mis à la terre adjacents, et le mode d'agencement d'électrodes en « + » consiste en le point central et ses quatre points mis à la terre adjacents ;

agencement d'un capteur de champs magnétiques horizontaux orthogonaux à deux composantes (Hx, Hy) ou d'un capteur de champs magnétiques orthogonaux à trois composantes (Hx, Hy, Hz) au point central du plus petit compartiment, dans lequel les directions Hx et Hy sont parallèles à celles des composantes du champ électrique, et dans lequel, lors de l'acquisition du maillage à petits compartiments, chaque petit compartiment est d'une unité à 2×2, 3×3, 4x4 ou 5x5 points, et le plus petit compartiment est d'une unité à 2x2 points ; un compartiment unitaire à 3×3 points est divisé un quatre plus petits compartiments, et un compartiment unitaire à 4x4 points est divisé en neuf plus petits compartiments, et dans lequel le plus petit compartiment n'a que des points de coin ;

(2) lors de la mise en œuvre d'un enregistrement de données, chaque station d'acquisition enregistre des données de séries temporelles du champ électromagnétique naturel avec les mêmes paramètres d'acquisition simultanément, et un taux d'échantillonnage est réglé sur la fréquence ;

(3) l'interférence est d'abord éliminée durant le traitement des données pour obtenir des données libres d'interférences, dans lequel le traitement d'élimination des interférences comprend les étapes suivantes :

a) addition des différences de potentiel de chaque point de relevé dans chaque boucle fermée selon la direction de la boucle fermée pour obtenir une erreur de fermeture, et comparaison de l'erreur de fermeture à une valeur de tolérance minimale prescrite ;

b) si l'erreur de fermeture est inférieure à la valeur de tolérance minimale, attribution de la somme des différences de potentiel dans chaque boucle fermée aux points de relevé respectifs pour ajuster la boucle en divisant la valeur de l'erreur de fermeture par le nombre de points de relevé, et addition de la valeur obtenue à la valeur de différence de potentiel mesurée de chaque point de relevé, dans lequel l'ajustement est d'abord mis en œuvre dans la boucle fermée à l'intérieur de chaque plus petit compartiment, dans lequel la boucle fermée à l'intérieur de chaque plus petit compartiment consiste en quatre points de coin du plus petit compartiment,

c) si l'erreur de fermeture est supérieure à la valeur de tolérance minimale prescrite, les données enregistrées à ce moment sont effacées ;

(4) pour chaque point de relevé de bord, calcul de la valeur moyenne de la même composante du champ électrique du point de relevé de bord et des deux points de relevé adjacents, dans lequel l'un des points de relevé adjacents se trouve de chaque côté du point de relevé de bord ; répétition du calcul avec deux points de relevé adjacents de chaque côté du point de relevé de bord, et augmentation du nombre de points de relevé adjacents de chaque côté du point de relevé de bord jusqu'à ce que tous les points de relevé du même bord soient utilisés ; pour les points de relevé de coin, calcul de la valeur moyenne pondérée de la même composante du champ électrique du point de relevé de coin et de deux points de relevé adjacents, dans lequel l'un des points de relevé adjacents se trouve de chaque côté du point de relevé de coin, répétition du calcul avec deux points de relevé adjacents de chaque côté du point de relevé de coin, et augmentation du nombre de points de relevé adjacents de chaque côté du point de relevé de coin jusqu'à ce que tous les points de relevé sur lesdits chaque bord adjacent au point de relevé de coin soient utilisés ; utilisation de la valeur du champ électrique calculée avec le nombre maximal de points de relevé adjacents et par conséquent la distance d'électrode maximale comme nouvelle valeur de champ électrique du point de relevé de bord ou de coin ;

(5) obtention de courbes de résistivité apparente et de courbes de phase pour chaque point de relevé.

2. Procédé d'acquisition de données à réseau consécutif électromagnétique à petits compartiments selon la revendication 1, **caractérisé en ce qu'**à l'étape (1), les points de coin et les points de bord du petit compartiment et le point central de la ligne de connexion entre chaque paire de points de relevé adjacents sont des points mis à la terre d'électrodes de réception (M, N), qui servent d'électrodes communes aux points de relevé adjacents, et aucune électrode n'est agencée au point central.

3. Procédé d'acquisition de données à réseau consécutif électromagnétique à petits compartiments selon la revendication 1, **caractérisé en ce qu'**à l'étape (1), la distance entre les points de relevé et la station d'acquisition de champ magnétique dans le plus petit compartiment est égale à 0,5 L ou à 0,707 L, L étant la longueur du côté du plus petit compartiment.

4. Procédé d'acquisition de données à réseau consécutif électromagnétique à petits compartiments selon la revendication 1, **caractérisé en ce qu'**à l'étape (2), un taux d'échantillonnage élevé est appliqué à la plage de haute fréquence afin d'obtenir un temps de rassemblement plus court, un taux d'échantillonnage moyen est appliqué à la plage de moyenne fréquence, et un taux d'échantillonnage bas est appliqué à la plage de basse fréquence afin d'obtenir un temps de rassemblement plus long.

**5.** Procédé d'acquisition de données à réseau consécutif électromagnétique à petits compartiments selon la revendication 1, **caractérisé en ce que** l'étape (5) comprend en outre les étapes suivantes : 1) calcul du spectre de puissance et du tenseur d'impédance afin d'obtenir la résistivité apparente et les courbes de phase en chaque point, dans lequel les composantes du champ magnétique des points de relevé respectifs du plus petit compartiment partagent le même champ magnétique que celui du point central ; 2) analyse du spectre de puissance et estimation du tenseur d'impédance à partir des données de série temporelle en chaque point de relevé pour chaque valeur de champ électrique calculée à l'étape 4, afin d'obtenir une séquence de courbes de résistivité apparente du même point de relevé ; 3) traçage de courbes fréquence - résistivité apparente, pour chaque valeur de champ électrique calculée à l'étape 4, du même point de relevé dans un repère logarithmique log-log, et 4) comparaison des règles de variation des courbes pour analyser si lesdites courbes sont affectées par le décalage statique : la courbe de résistivité apparente obtenue par le champ électrique avec la distance d'électrode maximale est représentative de l'effet du décalage statique minimal, si toutes les courbes coïncident avec la courbe de résistivité apparente pour la distance d'électrode maximale, il n'y a pas de décalage statique, et si les courbes pour une distance d'électrode relativement plus courte sont décalées par rapport à la courbe pour la distance d'électrode maximale, il y a un décalage statique.

Fig. 1

Fig. 2

Fig. 3

extrapolated
virtual values

Ex11    Ex11    Ex11    Ex11    Ex12    Ex13    Ex14

Ex1

Ex2

Ex3

Fig. 4

Fig.5

**REFERENCES CITED IN THE DESCRIPTION**

**Patent documents cited in the description**

- US 5043667 A

- CN 101017205 A